# EUROPÄISCHE PATENTANMELDUNG

(11) **EP 1 207 679 A2**
(43) Veröffentlichungstag der Anmeldung: **22.05.2002**
(21) Anmeldenummer: 01000596.5
(22) Anmeldetag: 06.11.2001
(51) Int. Cl.: H04M 17/00

(54) **Betriebsverfahren eines elektronischen Prepaid-Kontos und Anordnung zu dessen Durchführung**

(30) Priorität: 20.11.2000 DE 10057496; 01.02.2001 DE 10104540
(71) Anmelder: SIEMENS AKTIENGESELLSCHAFT, 80333 München (DE)
(72) Erfinder: Offer, Gero, 71116, Gärtingen (DE)

(57) **Zusammenfassung**

Betriebsverfahren eines elektronischen Prepaid-Kontos, insbesondere in Zuordnung zu einem Telekommunikationsnetz (IN) zur Bezahlung von Telekommunikationsleistungen, mit dem durch einen Inhaber eine Guthabenerhöhung realisiert wird, wobei durch einen Betreiber des Prepaid-Kontos eine durch einen unspezifischen Kartenleser (3) eines Kartenzahlungssystems (KZS) lesbare Zugangssoftware, insbesondere als Softwareprodukt in Form einer Zugangskarte (9), erstellt und die Guthabenerhöhung durch eine Bargeldeinzahlung im Zusammenhang mit einem Zugangssoftware-Lesevorgang ausgeführt wird.

## Beschreibung

Die Erfindung betrifft ein Betriebsverfahren für ein elektronisches Prepaid-Konto nach dem Oberbegriff des Anspruchs 1 sowie eine Anordnung zur Durchführung dieses Verfahrens.

Prepaid-Konten erlangen eine schnell zunehmende Bedeutung im Zusammenhang mit der Bereitstellung und Bezahlung von Telekommunikationsleistungen, insbesondere im Rahmen der sich dynamisch entwickelnden mobilen Telekommunikation. Sie stellen ein wesentliches Instrument der Gewinnung von Kunden dar, die die entsprechenden Leistungen weniger häufig in Anspruch nehmen und daher besonders an Tarifen interessiert sind, die sich durch eine niedrige oder fehlende Grundgebühr auszeichnen.

Grundsätzlich sind Prepaid-Konten aber auch zur Bezahlung andersartiger Dienstleistungen oder sogar von Waren - speziell im Rahmen langfristig angelegter Händler-Kunde-Beziehungen - geeignet, und hierbei insbesondere für Liefer- und Zahlungsbeziehungen, bei denen häufig sehr kleine Beträge beglichen werden müssen.

Während in den Anfängen der Praxis von Prepaid-Konten feste Guthabenbeträge elektronisch in Karten gespeichert waren und der Nutzer nach Verbrauch des Guthabens eine neue Karte erwerben mußte, gibt es seit einigen Jahren auch elektronisch aufladbare Guthabenkarten. Obgleich diese sich für viele Einsatzfälle von Prepaid-Konten bewährt haben, hat der für den Nutzer mit der Aufladung verbundene Aufwand zur Suche nach einfacheren Betriebsmöglichkeiten von Prepaid-Konten Anlaß gegeben.

Praktisch angewendet werden hierbei grundsätzlich die Verfahren der Erstellung und Übermittlung von Vouchers sowie des Bankeinzugs. Das erstere Verfahren ist mit hohem organisatorischem und logistischem Aufwand seitens des Betreibers und mit entsprechend hohen Distributionskosten verbunden. Das letztere Verfahren arbeitet nur mit einer gewissen Verzögerung und ist daher mit einem Invoice-Risiko verbunden. Zudem sind die jedem Lastschriftverfahren eigenen Widerrufsrechte des Kunden (Kontoinhabers) in gewisser Weise hinderlich für einen einfachen und reibungslosen Ablauf.

Der Erfindung liegt daher die Aufgabe zugrunde, ein einfaches und kostengünstiges Verfahren zum Betrieb eines elektronischen Prepaid-Kontos, insbesondere zur Guthaben-Erhöhung, sowie eine zur Durchführung dieses Verfahrens geeignete Anordnung anzugeben.

Diese Aufgabe wird in ihrem Verfahrensaspekt durch ein Verfahren mit den Merkmalen des Anspruchs 1 und in ihrem Vorrichtungsaspekt durch eine Anordnung mit den Merkmalen des Anspruchs 10 gelöst.

Die Erfindung schließt den wesentlichen Gedanken der Nutzung eines an sich bekannten und bewährten Kartenlesesystems zur Guthaben-Auffüllung eines Prepaid-Kontos ein. Sie schließt weiter den Gedanken ein, dieses Kartenlesesystem in einer Konfiguration zu nutzen, wo der Inhaber des Prepaid-Kontos im Zusammenhang mit dem Einsatz einer den Zugang zu dem Prepaid-System ermöglichenden Software bzw. Zugangskarte eine Bareinzahlung vornimmt.

Zu den wesentlichen Vorteilen der Erfindung zählt es, daß ein seit langem bewährtes System mit hohem Verbreitungsgrad zur Handhabung von Prepaid-Konten genutzt werden kann, so daß der organisatorische und kostenseitige Aufwand für die Erstellung des Systems ausgesprochen gering gehalten werden kann. Weiterhin sind die langjährige Erfahrung breitester Benutzerkreise und die hohe Nutzerakzeptanz der bewährten Kartenlesesysteme von großem Vorteil für eine schnelle und problemlose Marktdurchdringung. Schließlich sprechen die etablierten hohen Sicherheitsstandards für die Nutzung des bewährten Sys-tems - wobei die Sicherheitsanforderungen für die Handhabung eines Prepaid-Kontos zu dessen Auffüllung deutlich unter denen eines Kreditkartensystems liegen können. Entsprechend einfacher und kostengünstiger gestaltet sich die Erstellung und Verwaltung der zu den Prepaid-Konten gehörenden Zugangskarten.

Gemäß einer zweckmäßigen Realisierung des Erfindungsgedankens werden die in der Karte gespeicherten Daten nach dem Lesen in Echtzeit an den Kontenserver übermittelt und dort verarbeitet. Dadurch läßt sich insbesondere der Effekt erreichen, daß sowohl die Nutzer als auch das im Zusammenhang mit der Bareinzahlung und dem Lesen der Berechtigungskarte tätige Personal umgehend über den Erfolg der Transaktion informiert werden kann. Vorteilhaft ist auch das Fehlen jeglicher Verzögerung bei der technischen Verarbeitung von Daten, wodurch auch bei schnell aufeinanderfolgenden Auffüll- und Abbuchungsvorgängen Probleme bei der Kontenverwaltung vermieden werden.

Der erstgenannte Vorteil kommt insbesondere dann zum Tragen, wenn im Ergebnis der Prüfung und Verarbeitung der Identifikationsdaten durch den Kontenserver des Prepaid-Kontos ebenfalls im wesentlichen in Echtzeit eine elektronische Einzahlquittung erstellt, an den Kartenleser übertragen und dort angezeigt oder ausgedruckt wird. Bevorzugt werden im Falle eines Ausdrucks zwei Quittungsexemplare ausgedruckt, von denen eines als Zahlungsbeleg für den Kontoinhaber und das andere als Transaktionsbeleg im Rahmen des Betriebs des Kartenlesesystems dient.

In einer besonders einfach zu installierenden Ausführungsform erfolgt die Übertragung der aus der Zugangskarte gelesenen Software bzw. Daten und des Einzahlbetrags von der Einzahlstelle einerseits und der - wahlweise erstellten - Einzahlquittung zur Einzahlstelle andererseits über ein öffentliches Telekommunikationsnetz, insbesondere das Telefon-Festnetz. Hierbei sind die Implementierungs- und Betriebskosten sehr niedrig, und dennoch ist die Verfügbarkeit ausreichend hoch.

Die in einer bevorzugten Ausführung in einer Zugangskarte gespeicherte Software wird dem Betreiber des Kartenlesegerätes (Händler) in einer ersten organisatorischen Ausgestaltung des vorgeschlagenen Verfahrens direkt durch den Betreiber des Prepaid-Systems zur Verfügung gestellt. Sie ist dann unspezifisch bezüglich einzelner Konteninhaber und gewährleistet lediglich den Zugang zum Prepaid-System. Dies hat den Vorteil, daß der Einzahlende keine Karte mit sich führen bräuchte. Der autorisierte Händler würde diese Systemzugriffskarten verwalten. In einer anderen Ausführung werden individuelle Zugangskarten für die einzelnen Nutzer des Prepaid-Systems erstellt und an diese ausgegeben - was insbesondere in Verbindung mit einem weiteren Kartensystem (Kredit- oder Kundenkarten) als sinnvoll erscheint. In beiden Fällen können neben der eigentlichen Zugangssoftware auch bestimmte Daten in das Kartenlesegerät gelesen bzw. geladen werden. Diese Daten umfassen insbesondere einen Identifikator einer bestimmten Dienstleistung (oder einer Mehrzahl von Dienstleistungen), zu deren Bezahlung das Prepaid-Konto genutzt wird. Dies können insbesondere Telekommunikationsleistungen sein, wobei die Identifikationsdaten bei einer nutzer-individuellen Zugangskarte die Rufnummer eines vom Inhaber des Prepaid-Kontos genutzten Anschlusses des Telekommunikationsnetzes umfassen.

In einer hierzu alternativen Ausgestaltung des Systems kann ein entsprechender Identifikator - also beispielsweise die erwähnte Rufnummer - im Zusammenhang mit dem Einzahlvorgang "von Hand" eingegeben werden, während die Berechtigungskarte im wesentlichen nur Daten für einen Systemzugriff zum System des Betreibers des Prepaid-Kontos (und Anbieters der hiermit bezahlten Dienstleistungen) enthält. Es sind auch kombinierte Verfahrensweisen (und entsprechende Ausführungen der Zugangskarte) möglich, bei denen ein Teil der relevanten, insbesondere dienstleistungs- bzw. nutzungsspezifischen, Daten aus der Karte ausgelesen und ein anderer Teil im Zusammenhang mit dem Lesevorgang am Lesegerät eingegeben wird. Desweiteren erscheint es auch als möglich, die Software der Lesegeräte so zu erweitern, daß nur die Eingabe z. B. der Telefonnummer und des Betrages vorgenommen werden muß.

Im Kontext einer vollständigen Automatisierung des Auffüllens des Prepaid-Kontos kann die Einzahlung auch an einem Münz- bzw. Geldscheinautomaten erfolgen, wie er beispielsweise in Nahverkehrs- und Parksystemen eingesetzt wird und sich bewährt hat. Hierbei wird der Einzahlbetrag beim Einführen der Münzen bzw. Geldscheine in den Automaten selbsttätig ermittelt und zusammen mit den übrigen Daten (händische Eingabe oder per Magnetkarte) automatisch an den Kontenserver des Prepaid-Kontos übermittelt.

Zur Realisierung einer in sich abgeschlossenen Transaktion wird zweckmäßigerweise im Ergebnis der Prüfung der von der Einzahlstelle erhaltenen Daten durch den Kontenserver ein Einzugssignal zum Einzug des Einzahlungsbetrags an den Bankserver des Kartenlesebetreibers (Händlers) übermittelt, zu dem der Kartenleser gehört. Die Realisierung dieser Ausführungsform bedarf selbstverständlich einer vertraglichen Regelung zwischen dem Betreiber des Kartenlesesystems, der Bank, über die dessen Abrechnungen laufen, und dem Betreiber des Prepaid-Kontos.

Eine Anordnung zur Durchführung des oben erläuterten Verfahrens umfaßt neben dem an sich bekannten Kartenleser und der üblichen Telekommunikations- bzw. Datenverbindung zu diesem einen zur Kommunikation mit dem Kartenleser ausgebildeten Kontenserver zur Verwaltung des Prepaid-Kontos und eine zum Lesen durch den Kartenleser ausgebildete Berechtigungskarte des Betreibers des Prepaid-Kontos.

Der Kontenserver hat insbesondere eine Empfangs- und Verarbeitungseinheit, die zum Empfang und zur Verarbeitung von durch den Kartenleser aus der Berechtigungskarte ausgelesenen und/oder eingegebenen Daten ausgebildet ist. In einer vorteilhaften Ausführung hat er zudem eine Quittungs-Sendeeinheit, die einen vom Kartenleser empfangbaren und auswertbaren Quittungsdatensatz über die vollzogene Transaktion (Auffüllung des Prepaid-Guthabens) erzeugt und an den Kartenleser übermittelt.

In einer nach obigem weiter bevorzugten Ausgestaltung hat der Kontenserver eine Einzugssignal-Sendeeinheit und mindestens zeitweise eine Datenverbindung zu einem externen Bankserver, auf dem die im Kartenlesesystem ablaufenden Transaktionen verwaltet werden, um einen Einzug des Einzahlbetrags vom Konto des Kartenlesebetreibers zugunsten des Betreibers des Prepaid-Kontos zu realisieren.

Vorteile und Zweckmäßigkeiten der Erfindung ergeben sich im übrigen aus den Unteransprüchen sowie der nachfolgenden Beschreibung eines bevorzugten Verfahrensablaufes und einer bevorzugten Anordnung zur Ausführung der Erfindung anhand der Figuren. Von diesen zeigen:
Fig. 1 eine Prinzipskizze zur Verdeutlichung des Verfahrensablaufs in einer bevorzugten Anordnung und
Fig. 2 eine schematische Darstellung wesentlicher Funktionskomponenten des vorgeschlagenen Systems in Form eines Funktions-Blockschaltbildes.

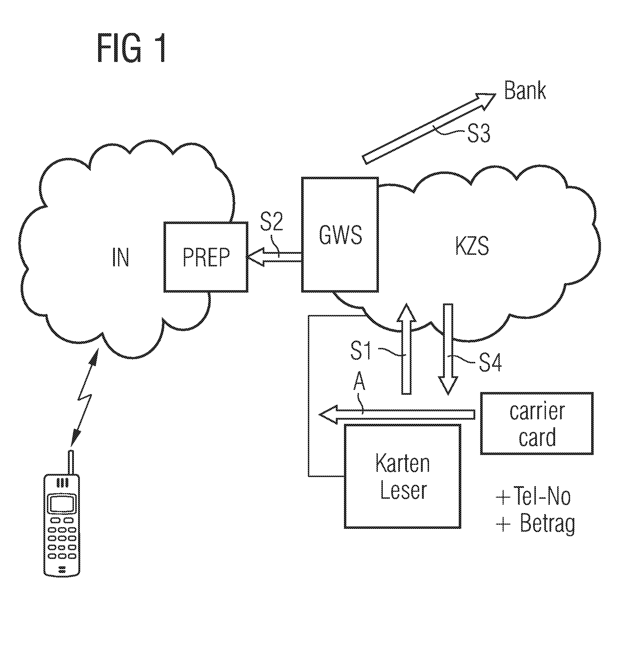

In Fig. 1 ist skizzenartig dargestellt, wie über einen an ein Kartenzahlungssysstem KZS angeschlossenen Kartenleser unter Zwischenschaltung eines Gateway-Servers GWS ein Prepaid-Konto PREP zur Nutzung von Telekommunikationsleistungen in einem als intelligentes Netz ausgebildeten Mobilfunknetz IN aufgefüllt wird. In einem Eingabevorgang A wird eine Berechtigungskarte carrier card durch den Kartenleser gezogen und von Hand die Telefonnummer des Anschlusses des Nutzers des Mobilfunknetzes und Prepaid-Kontos sowie ein gleichzeitig eingezahlter Geldbetrag eingegeben. Die eingelesenen bzw. eingegebenen Daten werden in einem ersten Datenübertragungsschritt S1 an das Kartenzahlungssystem KZS übertragen.

In einem Schritt S2 erfolgt eine Aufbuchung des Einzahlbetrags auf das Prepaid-Konto PREP. Nachdem die Aufbuchung erfolgt ist, wird in einem dritten Schritt S3 eine Überweisung bzw. ein Einzug des Einzahlbetrags von der Bank des Kartenlesebetreibers zugunsten des Betreibers des Mobilfunknetzes IN gesteuert. In einem Schritt S4 wird schließlich am Kartenleser eine Quittung (in doppelter Ausfertigung) für den Einzahler und das Personal des Kartenzahlungssystems ausgegeben. In einem (nicht dargestellten) letzten Schritt legt der Kartenlesebetreiber das Geld händisch in seine Kasse.

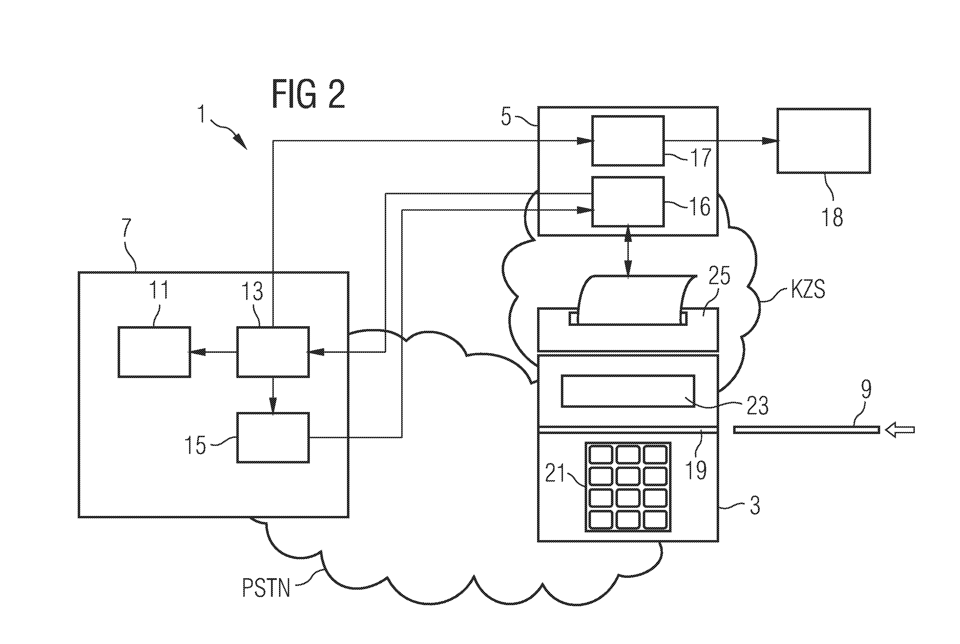

In Fig. 2 ist der Aufbau einer entsprechenden Prepaid-Auffüllanordnung 1 unter Funktions-Gesichtspunkten etwas genauer dargestellt. Die Prepaid-Auffüllanordnung 1 umfaßt einen Kartenleser 3, der in dem bereits erwähnten Kartenzahlungssystem KZS an einen Gateway-Server 5 angeschlossen ist, einen Kontenserver 7, der temporär über eine Leitung eines öffentlichen Telefon-Festnetzes PSTN mit dem Gateway-Server 5 verbunden ist, und eine Berechtigungskarte 9 des Betreibers des Prepaid-Kontos.

Der Kontenserver 7 umfaßt neben dem eigentlichen Guthabenspeicher 11, in dem der Prepaid-Account eines Nutzers gespeichert ist, eine Empfangs- und Verarbeitungseinheit 13 für vom Gateway-Server 5 übermittelte Daten und eine Quittungs-Sendeeinheit 15. Die Empfangs-Verarbeitungseinheit 13 steht eingangsseitig mit dem Ausgang des Gateway-Servers 5 in Verbindung, während die Quittungs-Sendeeinheit 15 ausgangsseitig mit einem entsprechenden Eingang des Gateway-Servers verbunden ist.

Der Gateway-Server 5 weist einen Prozessor/Protokollwandler 16 zur Sicherung der Kommunikation mit dem Kartenleser 3 einerseits und dem Kontenserver 7 andererseits eine Einzugssignal-Sendeeinheit 17 zur "banktechnischen" Abwicklung des Zahlungsausgleichs zwischen dem durch das Kartenzahlungssys-tem festgelegten Geldempfänger der Bareinzahlung und dem Betreiber des Prepaid-Systems (speziell - Mobilfunksystems) auf. Die Einzugssignal-Sendeeinheit 17 des Gateway-Servers 5 ist eingangsseitig logisch mit der Empfangs- und Verarbeitungseinheit 13 des Kontenservers 7 und ausgangsseitig mit einem Eingang eines Bankservers 18 verknüpft.

Der Kartenleser 3 hat einen Kartenschacht 19 mit zugeordneter (nicht dargestellter) Leseeinheit, eine Eingabetastatur 21, eine optische Anzeigeeinheit 23 und einen Quittungsdrucker 25. Nach Einführen der Berechtigungskarte 9 in den Kartenschacht 19 werden in dieser gespeicherte Daten des Prepaid-Systems und ggf. Identifikationsdaten bezüglich der mit dem Prepaid-Konto verknüpften Dienstleistungen und/oder des Nutzers und/oder des Prepaid-Konto-Betreibers ausgelesen. Parallel zu diesem Lesevorgang wird ein Geldbetrag zur Auffüllung des Prepaid-Kontos im Guthabenspeicher 11 des Kontenservers 7 eingezahlt, und der Betrag wird manuell über die Eingabetas-tatur 21 eingegeben.

Die eingelesenen bzw. eingegebenen Daten gelangen zum Prozessor/Protokollumsetzer des Gateway-Servers 5. Dieser ermittelt den zugehörigen Prepaid-Konto-Server und baut eine Verbindung zu dessen Empfangs- und Verarbeitungseinheit 13 auf, wo die Daten geprüft und verarbeitet werden. Im hier als positiv angenommenen Ergebnis der Prüfung und Verarbeitung wird der Speicherstand des Guthabenspeichers 11 um den Einzahlungsbetrag erhöht, über die Quittungs-Sendeeinheit 15 eine elektronische Quittung an den Gateway-Server 5 übermittelt und zudem über dessen Einzugssignal-Sendeeinheit 17 ein Einzug des Betrags zugunsten des Betreibers des Prepaid-Kontos über den Bankserver 5 veranlaßt. (Bei negativem Prüfungsergebnis wird die Transaktion natürlich nicht ausgeführt.)

Es versteht sich, daß die hier erwähnten Funktionskomponenten des Kontenservers 7 hard- wie auch softwaremäßig und insbesondere in einer Kombination von Hard- und Softwarekomponenten realisiert werden können.

Die Ausführung der Erfindung ist nicht auf das oben skizzierte Beispiel beschränkt, sondern ebenso in einer Vielzahl von Abwandlungen möglich, die im Rahmen fachgemäßen Handelns liegen. Insbesondere ist sie unter Einsatz eines Kundenkarten-systems anstelle eines regelrechten Kartenzahlungssystems sowie (wie oben bereits erwähnt) mit kombinierten Karten- und Bargeldautomaten möglich, bei denen eine Eingabe des Geldbetrags entfällt, da dieser automatisch ermittelt wird.

Desweiteren sei erwähnt, daß natürlich eine vorteilhafte Ausführung darin besteht, anstatt physikalischer Kartenleser diese integriert in Kassen zu realisieren, bzw. logisch (und hier statt mit Kartenlesevorrichtung auch menügesteuert) in internetfähigen PCs zu realisieren.

## Patentansprüche

1. Betriebsverfahren eines elektronischen Prepaid-Kontos **auf einem Kontoserver (7),** in Zuordnung zu einem Telekommunikationsnetz (IN) zur Bezahlung von Telekommunikationsleistungen, mit dem durch einen Inhaber eine Guthabenerhöhung realisiert wird,
durch einen Betreiber des Prepaid-Kontos eine durch einen unspezifischen Kartenleser (3) eines Kartenzahlungssystems (KZS) lesbare Zugangssoftware **in Form einer Zugangskarte (9)**,erstellt und
die Guthabenerhöhung durch eine Bargeldeinzahlung im Zusammenhang mit einem Zugangssoftware-Lesevorgang ausgeführt wird, wobei Identifikationsdaten (Tel-No) des Inhabers zusammen mit dem Einzahlbetrag (Betrag) an **den** Kontenserver (7) übermittelt werden.

2. Verfahren nach Anspruch 1,
**dadurch gekennzeichnet,**
**daß** die Identifikationsdaten (Tel-No) und der Einzahlbetrag (Betrag) im wesentlichen in Echtzeit an den Kontenserver (7) übermittelt und verarbeitet werden.

3. Verfahren nach Anspruch 1 oder 2,
**dadurch gekennzeichnet,**
**daß** im Ergebnis einer Prüfung der Identifikationsdaten durch den Kontenserver (7), eine elektronische Einzahlquittung erstellt und an den Kartenleser (3) übertragen und dort angezeigt und/oder gespeichert und/oder ausgedruckt wird.

4. Verfahren nach Anspruch 3,
**dadurch gekennzeichnet,**
**daß** zwei Einzahlquittungen ausgedruckt werden, von denen die erste für den Inhaber des Prepaid-Kontos und die zweite für einen Betreiber des Kartenlesers (3) bestimmt ist.

5. Verfahren nach einer der vorangehenden Ansprüche,
**dadurch gekennzeichnet,**
**daß** die Übertragung der Identifikationsdaten und des Einzahlbetrags zum Kontenserver (7) und wahlweise der Einzahlquittung zum Kartenleser (3) über ein öffentliches Telekommunikationsnetz (PSTN) erfolgt.

6. Verfahren nach einem der vorangehenden Ansprüche,
**dadurch gekennzeichnet,**
**daß** die Identifikationsdaten einen Identifikator einer Dienstleistung umfassen, zu deren Bezahlung das Prepaid-Konto benutzt wird.

7. Verfahren nach Anspruch 6,
**dadurch gekennzeichnet,**
**daß** die Identifikationsdaten eine vom Inhaber des Prepaid-Kontos genutzte Rufnummer (Tel-No) des Telekommunikationsnetzes (IN) umfassen.

8. Verfahren nach einem der vorangehenden Ansprüche,
**dadurch gekennzeichnet,**
**daß** im Zusammenhang mit dem Zugangssoftware-Lesevorgang neben dem Einzahlbetrag (Betrag) weitere Daten manuell eingegeben werden, insbesondere eine vom Inhaber des Prepaid-Kontos genutzte Rufnummer (Tel-No) des Telekommunikationsnetzes und/oder Authentisierungsdaten des Inhabers.

9. Verfahren nach einem der vorangehenden Ansprüche,
**dadurch gekennzeichnet,**
**daß** im Ergebnis der Prüfung der Identifikationsdaten (Tel-No) und der Auswertung des Einzahlbetrags (Betrag) durch einen Gateway-Server (GWS; 5) des Kartenzahlungssystems (KZS) ein Einzugssignal zum Einzug des Einzahlbetrags zugunsten des Betreibers des Prepaid-Kontos an einen fremden Bankserver (18) übermittelt wird, dessen Betreiber für das Clearing zuständig ist.

10. Anordnung zur Durchführung eines **Betriebsverfahrens für ein elektronisches Prepaid-Konto auf einem Kontoserver (7),**
- mit einem unspezifischen, zum Lesen herkömmlicher Geld- und/oder Kreditkarten ausgebildeten Kartenleser (3),
- einem Kontenserver (7) zur Verwaltung des Prepaid-Kontos,
- einer Telekommunikations- oder Datenverbindung (PSTN) zwischen dem Kartenleser und dem Kontenserver und
- einer durch den Kartenleser lesbaren Zugangssoftware, als Softwareprodukt in Form einer Zugangskarte (9),
bei dem der Kontenserver eine zum Empfang von durch den Kartenleser gelesenen oder manuell eingegebenen Identifikationsdaten (Tel-No) und eines am Kartenleser eingegebenen Einzahlungsbetrags (Betrag) ausgebildete Empfangs- und Verarbeitungseinheit (13) aufweist.

11. Anordnung nach Anspruch 10,
**dadurch gekennzeichnet,**
**daß** der Kontenserver (7) eine Quittungs-Sendeeinheit (15) aufweist, welche zur Übermittlung einer durch den Gateway-Server (GWS; 5) und anschließend den Kartenleser (3) empfangbaren elektronischen Einzahlquittung ausgebildet ist.

12. Anordnung nach Anspruch 10 oder 11,
**dadurch gekennzeichnet,**
**daß** der Kartenleser (3) bzw. Gateway-Server (GWS; 5) und der Kontenserver (7) an ein öffentliches Telekommunikationsnetz (PSTN) angeschlossen sind.

13. Anordnung nach einem der Ansprüche 10 bis 12,
**dadurch gekennzeichnet,**
**daß** der Gateway-Server (GWS; 5) eine Einzugssignal-Sendeeinheit (17) zur Erzeugung eines Einzugssignals und Mittel zum Aufbau einer mindestens temporären Verbindung mit einem fremden Bankserver (18) zur Übermittlung des Einzugssignals an diesen aufweist.

14. Anordnung nach einem der Ansprüche 10 bis 13,
**dadurch gekennzeichnet,**
**daß** der Kartenleser in einem Kassensystem oder einem internetfähigen PC nachgebildet ist.
